# EUROPEAN PATENT APPLICATION

(11) **EP 3 992 865 A1**
(43) Date of publication of application: **04.05.2022**
(21) Application number: 21188408.5
(22) Date of filing: 29.07.2021
(51) Int. Cl.: G06N 3/08, G06N 3/04

(54) **ACCELERATED LOADING OF UNSTRUCTURED SPARSE DATA IN MACHINE LEARNING ARCHITECTURES**

(30) Priority: 27.10.2020 US 202017081509
(71) Applicant: INTEL Corporation, Santa Clara, CA 95054 (US)
(72) Inventor: Chinya, Gautham, Sunnyvale, CA California 94089 (US); Mathaikutty, Deepak, Santa Clara, ca California 95054 (US); Venkataramanan, Guruguhanathan, Santa Clara, ca California 95054 (US); Mohapatra, Debabrata, Santa Clara, ca California 95054 (US); Jung, Moongon, San Jose, ca California 95131 (US); Kim, Sang Kyun, Santa Clara, ca California 95134 (US); Raha, Arnab, Santa Clara, CA California 95054 (US); Brick, Cormac, San Francisco, ca California 94110 (US)
(74) Representative: Goddar, Heinz J.

(57) **Abstract**

Systems, apparatuses and methods may provide for technology that identify an assignment of weights of a workload to a plurality of processing elements, where the workload is to be associated with a neural network. The technology generates a representation that is to represent whether each of the weights is a zero value or a non-zero value. The technology further stores the representation into partitions of a storage structure based on the assignment of the weights, where the partitions are each to be dedicated to a different one of the processing elements.

## Description

### TECHNICAL FIELD

Embodiments generally relate to enhanced loading of sparse and unstructured weights and sparse activations. More particularly, embodiments relate to a sparsity-aware compression scheme for encoding highly sparse weights and skipping loading of sparse activations.

### BACKGROUND

Neural networks (e.g., DNNs) may include learnable parameters such as weights and biases. The weights and/or biases may be considered "sparse." For example, weights and/or biases may have a significant number of zeros generated during the training phase. Zero valued weights may not contribute towards partial operations during the training (e.g., sum accumulation during multiply-and-accumulate operation in convolution). Highly sparse weights may cause activations to become sparse in later layers of the neural networks after the inputs are processed by earlier nodes and activation functions of the earlier nodes (e.g., non-linear activation functions such as rectified linear unit). Further, network quantization for running inference on edge devices may also result in a high number of zeros in weights, which causes the output of activation functions to also become zero.

### BRIEF DESCRIPTION OF THE DRAWINGS

The various advantages of the embodiments will become apparent to one skilled in the art by reading the following specification and appended claims, and by referencing the following drawings, in which:
FIG. 1 is a process of an example of a data loading and compute process according to an embodiment;
FIG. 2 is a flowchart of an example of a method of loading a neural network workload according to an embodiment;
FIG. 3 is a process of an example of a sparsity-aware compression scheme according to an embodiment;
FIG. 4 is a diagram of an example of a sparsity-aware decoder architecture according to permuted cache sets according to an embodiment;
FIG. 5 is a block diagram of an example of processing element according to permuted cache sets according to an embodiment;
FIG. 6 is a flowchart of an example of a method of lookahead activation according to an embodiment;
FIGS. 7A, 7B and 7C are diagrams of examples of compression techniques according to an embodiment;
FIGS. 8A and 8B are block diagrams of an example of a layout of compressed data and the reconstruction of sparsity bitmaps according to an embodiment;
FIG. 9 is a block diagram of an example of a computing system according to an embodiment;
FIG. 10 is an illustration of an example of a semiconductor apparatus according to an embodiment;
FIG. 11 is a block diagram of an example of a processor according to an embodiment; and
FIG. 12 is a block diagram of an example of a multi-processor based computing system according to an embodiment.

### DESCRIPTION OF EMBODIMENTS

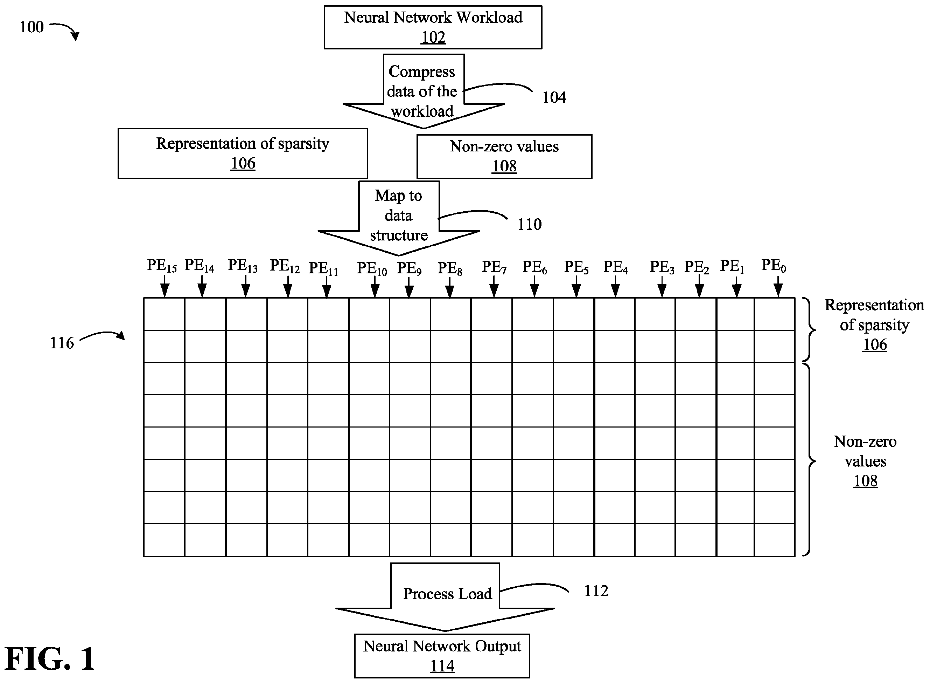

Turning now to FIG. 1, an enhanced data loading and neural network (e.g., a deep neural network associated with an artificial intelligence application) compute process 100 is illustrated. Process 100 may leverage the sparsity available in weights and activations to achieve significant sparsity acceleration speedup (e.g., with machine learning accelerators) by skipping zeros during compute. For example, compute may be bounded by loading of data at a rate that keeps the processing elements (e.g., compute units) occupied at full capacity. Thus, process 100 may include a "sparsity-aware compression scheme" for encoding highly sparse weights. The sparsity aware compression scheme may operate on unstructured sparsity data (e.g., no assumption of a certain number of zero values per of total number of values) and substantially reduce load times. Doing so may enhance operation since compute nodes of the neural network may not be bounded by load times and may process operations with enhanced efficiency and speed.

For example, the compression format illustrated in data structure 116 may allow faster loading of weights during a data load phase which may enable sparsity acceleration enhancements during compute phase since the compute phase is not blocked or waiting on the load for execution (e.g., waiting on data). The compression scheme further allows lower latency decompression in which a loading time of weights may be proportional to the number of non-zero elements within a fixed length window of weight points. Furthermore, the lookahead scheme may bypass activations during a load phase to accelerate an overall load phase so that sparsity acceleration may not be load bounded. Thus, the lookahead scheme may be applicable for accelerating the load of sparse activations. As such, embodiments described herein may accelerate the loading time of both weights and activations which may result in sparsity acceleration of layers with highly sparse weights and sparse activations that may otherwise be bounded by slowness in during the load phase in other implementations.

For example, in process 100, a neural network workload 102 is to be processed. The neural network workload 102 may include weights and biases. The process 100 may compress data of the workload 104, such as the weights, to generate a representation of sparsity 106 and non-zero values 108 of the workload 102. Zero values may be removed from the workload to compress the data of the workload 104. The amount and positions of the zero values in the workload may be represented in the representation of sparsity 106 (e.g., a zero value may represent a "0" value and a non-zero value may be represented by a "1" value). The sparsity in weights may be known prior to execution and for certain layers. After training of the neural network, the degree of weight sparsity can be as high as 90%, and the compression scheme may execute on highly sparse weights tensor volume to incur very low compression efficiency loss. As will be explained below, the representation of sparsity 106 and the non-zero values 108 may be mapped to a data structure 110, 116 (e.g., a bitmap).

Process 100 may include dividing the neural network workload 102 and compressing the data of the workload 104 based on processing elements (PEs). For example, in the present example 16 PE₀-PE₁₅ are provided. The process 100 may identify which weights will be distributed to each of PE₀-P₁₅ to process the neural network workload 102. The non-zero values 108 may each be associated with one of PE₀-PE₁₅ that is to process the workload 102 based on the weight. Thus, PE₀ may be assigned three weights, PE₁ may be assigned four weights different from the three weights of PE₀ and so forth.

The data structure 116 may be a compressed block data layout (e.g., a bitmap) in a memory. For example, the representation of sparsity 106 may be stored as a bitmap in the data structure 116. For example, suppose N is the number of weight points that are allocated to each PE of PE₀-PE₁₅ per round of compute. A number of bits used to store the representation of sparsity 106 (e.g., a sparsity map) per PE may be N bits or equivalently ceil [N/8] bytes. Thus, the representation of sparsity may have a size of be N bits times the number of PEs of PE₀-PE₁₅. Thus, if the number of weights (or weight points) for each PE per round of compute is greater than 8, then the representation of sparsity 106 may occupy two bytes. If the number of weights (or weight points) for each PE per round of compute is greater than 16, then the representation of sparsity 106 may occupy three bytes and so forth.

As illustrated, the process 100 groups weight elements for individual PEs of the PE₀-PE₁₅ together into a byte aligned format within the data structure 116. The total number of lines in the data structure 116 that will hold the representation sparsity 106 may be equal to the ceil [N/8] with byte 0, 1, 2, .... 15 of each line holding the sparsity bitmap for PE₀-PE₁₅ respectively. In the present example, the representation sparsity occupies two rows of the data structure 116 in an aligned format.

The data structure 116 may be partitioned according to PE₀-PE₁₅ to provide dedicated partitions to the PE₀-PE₁₅. Each column of the data structure 116 may include data associated with the respective PE of the PE₀-PE₁₅. For example, the rightmost column is dedicated to PE₀ while the leftmost column is dedicated to PE₁₅, and each intervening column is dedicated to one of PE₂ to PE₁₄. Dividing the data structure on a per column basis and assigning each column to one of PE₀-PE₁₅ may result in the representation of sparsity 106 being simplified and enhanced to reduce a number of load cycles needed to execute the operations.

The non-zero values 108 may further be stored in appropriate columns. For example and as discussed above, process 100 may divide and sort the non-zero values 108 according to which PE₀-PE₁₅ will utilize the non-zero values 108 (e.g., weights). Thus, each value of the non-zero values 108 may be stored accordingly and into an appropriate column of a PE of the PE₀-PE₁₅ that will utilize the value to process the neural network workload 102. For example, if a first value of the non-zero values 108 will be used by PE₀, the first value will be stored in the column of the data structure 116 that is associated with PE₀ (e.g., the rightmost column). If a second value is associated with the PE₁ the second value may be stored in the column for the PE₁ and so forth.

As illustrated, following the representation of sparsity 106, are the actual data bytes of the weights, which are stored in the non-zero values 108. Each column acts as a lane dedicated to an individual PE of the PE₀-PE₁₅ and holds the non-zero data for that PE.

Process 100 may distribute portions of the representation of sparsity 106 and the portions of the non-zero values 108 on a per column basis to appropriate PE₀-PE₁₅. For example, the rightmost column may be distributed to PE₀, the next column may be distributed to PE₁ and so forth. The process 100 may then process the load 112 (e.g., compute the workload) based on the distributed portions and provide a neural network output 114.

Thus, some embodiments may provide a sparsity-aware compression scheme for encoding sparse weights which may allow faster decompression of weights data and distribution to destination PE of PE₁-PE₁₅. Further, some embodiments enhance sparsity acceleration of compute by mitigation of load induced stalls during the compute phase. Moreover, some embodiments may maintain weights in a compressed format in each PE₁₋₁₅ after distribution based on a software programmed schedule.

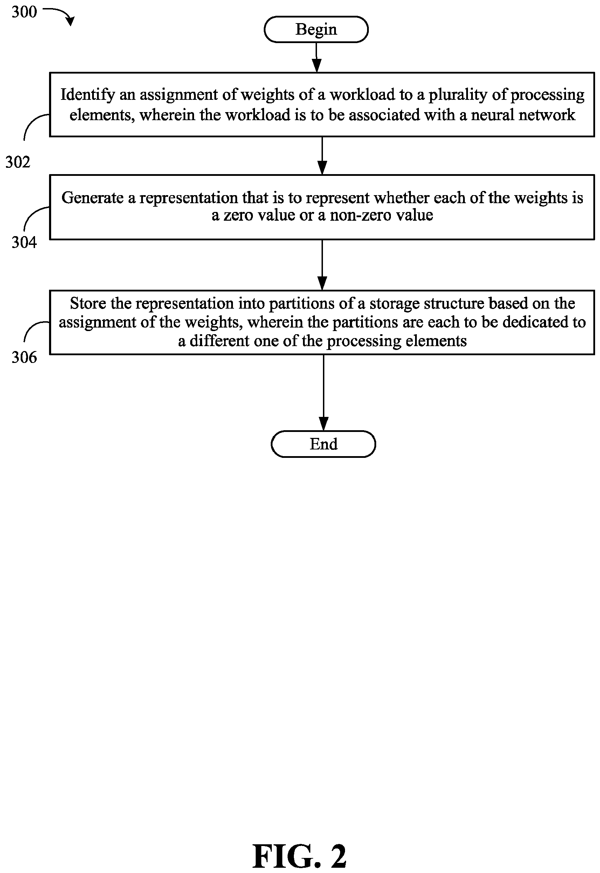

FIG. 2 shows a method 300 of loading a neural network workload. The method 300 may generally be implemented as part of the process 100. In an embodiment, the method 350 is implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method 300 may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 302 identifies an assignment of weights of a workload to a plurality of processing elements, where the workload is associated with a neural network. Illustrated processing block 304 generates a representation that is to represent whether each of the weights is a zero value or a non-zero value. Illustrated processing block 306 stores the representation into partitions of a storage structure based on the assignment of the weights, where the partitions are each to be dedicated to a different one of the processing elements.

In some embodiments, method 300 for each respective weight of the weights, generates a representation value that is to represent whether the respective weight is a zero value or a non-zero value, identifies a respective processing element of the processing elements that is to execute an operation based on the respective weight, and stores the representation value in one of the partitions dedicated to the respective processing element. In some embodiments, the method 300 removes zero values from the weights to generate compressed weights. In some embodiments, the method 300 identifies a maximum number of non-zero weights of the non-zero weights that are each associated with a first processing element of the processing elements, identifies that each of a group of weights of the compressed weights is associated with a second processing element of the processing elements, identifies that a total number of the group of the weights is less than the maximum number, and inserts a zero value into a group of weights of the compressed weights in response to the total number being less than the maximum number. In some embodiments, the method 300 decodes the representation into a plurality of bits, identifies a lookahead window that is to correspond to a number of bits, during a same load cycle, identifies whether a current byte position corresponds to a zero value and whether a next byte position corresponds to a zero value, and bypasses a load process associated with the next byte position in response to the next byte position corresponding to the zero value.

In some embodiments, the storage structure is a bitmap. A first partition of the partitions corresponds to a first line of the bitmap, where the first partition is to be dedicated to a first processing element of the plurality of processing elements, and a second partition of the partitions is to correspond to a second line of the bitmap, where the second partition is to be dedicated to a second processing element of the plurality of processing elements.

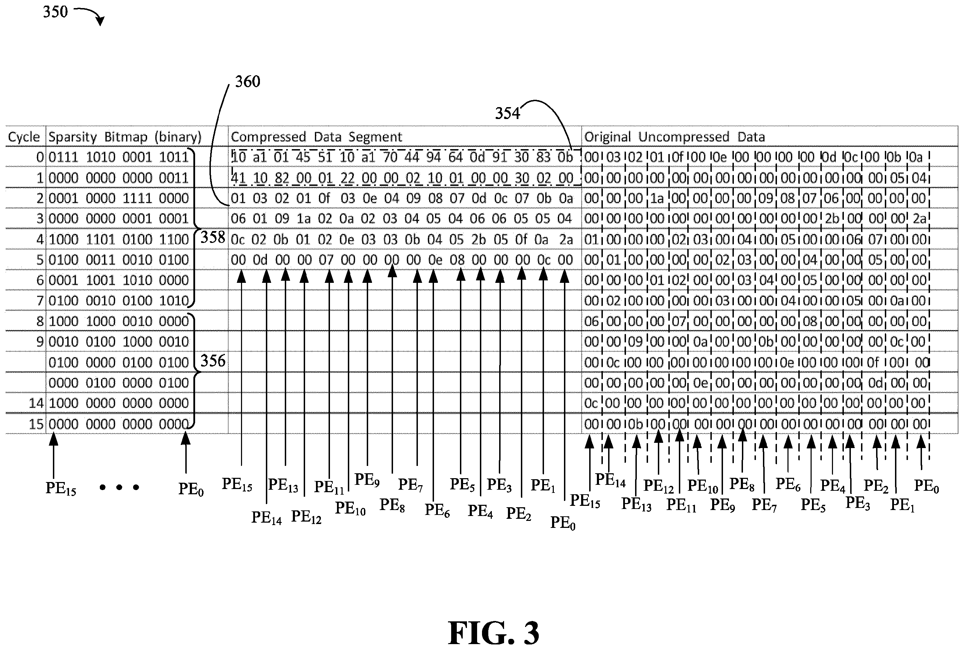

FIG. 3 illustrates a sparsity-aware compression scheme 350. The compression scheme 350 may be implemented in conjunction with any of the embodiments described herein, including the process 100 (FIG. 1) and method 300 (FIG. 2). The original uncompressed data may be sorted and arranged according to the PE₀-PE₁₅ that will process the data.

As an example, if PE₀ holds 16 weight points in 8-bit uncompressed hex format represented as [00, 00, 00, 00, 00, 00, 00, 00, 00, 00, 00, 00, 2a, 00, 04, 0a], a compressed equivalent sparsity representation (which is referred to as the sparsity bitmap) would be [00001011] and [00000000] for byte 0 358 and byte 1 356 respectively of the sparsity representation where each "0" corresponds to a zero value and each "1" corresponds to a non-zero value. The sparsity bitmap (e.g., a representation of sparsity) representing PE₀ may be appended with the zero bytes of data and concatenated with [00] for a final structure of [00, 2a, 04, 0a] as illustrated in the rightmost column of the compressed data segment. It is worthwhile to mention that non-zero bytes of data for PE₀ includes "00" in the 4th entry. This is since a maximum number of non-zero entries among all of PE₀-PE₁₅ is 4. Thus, the non-zero bytes may be padded such that the 4th entry for PE₀, which has only 3 non-zero entries out of 16 weight points, with a "0." Padding the non-existent 4th entry in PE₀ to include a "0" allows simplification of a decompression engine that decompresses the compressed data as well as aligns the compressed data block to a memory (e.g., SRAM) line boundary. Thus, simplification of decoder design and alignment to the memory line boundary for ease of read and/or write memory accesses incurs a certain degree of compression efficiency loss due to padding of zeros in the compressed data block.

The sparsity representation may be converted from a binary to a hexadecimal format and stored as a sparsity bitmap 354 in the compressed data format. The non-zero data and the padded values may be stored as data 360. The sparsity bitmap 354 and data 360 may correspond to a data structure. It is further worth noting that the compressed data segment may also be aligned so that each column only includes data associated with data that one of the PE₀-PE₁₅ will utilize to execute a neural network process.

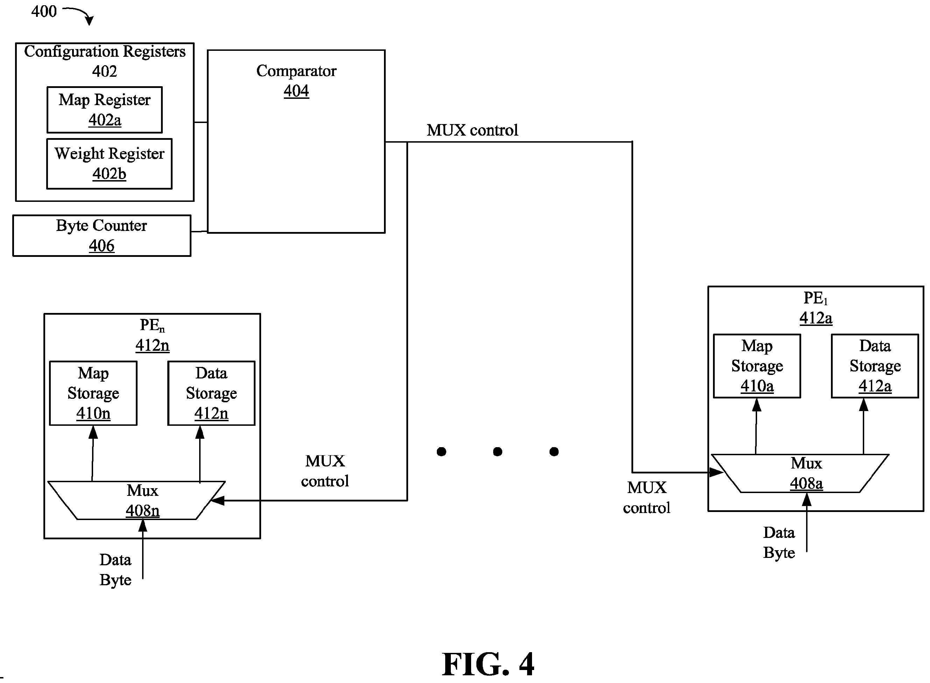

FIG. 4 illustrates an architecture 400 for operation of a sparsity-aware decoder for a sparse weight compression scheme. The architecture 400 may be implemented in conjunction with any of the embodiments described herein, including the process 100 (FIG. 1), method 300 (FIG. 2) and scheme 350 (FIG. 3). Configuration registers 402 include map register 402a and weight register 402b (e.g., software programmed re-configurable registers that may be programmed via a compiler) to track a number of bytes in a sparsity representation (e.g., bitmap) for each PE and a number of bytes of non-zero weight data along with padded zeros for memory line alignment within each PE respectively.

In this embodiment, map register 402a may include two entries and weight register 402b may include four entries. Using the values programmed into the map register 402a and weight register 402b, a byte counter 406 may track the current byte count (e.g., a number of load cycles that corresponds to a byte number such as byte 0, byte 1, byte 2, etc.) to distinguish between a sparsity bitmap byte from a weight byte data. A comparator 404 may output a multiplexer (MUX) control signal based on the value of the byte counter 406 and the values programmed into the into the map register 402a and weight register 402b. For example, when the count of the byte counter 406 is between 0 and a maximum value (e.g., two) of the map register 402a, the MUX control signal denotes a sparsity bitmap byte. When the count of the byte counter 406 is equal to or above the maximum value of the map register 402a and less than a summation of the maximum value of the map register 402a and a maximum value of the weight register 402b, the MUX control may denote a weight data byte.

Once the comparator 404 generates the output MUX signal, the same MUX signal may be applied to all of MUXs 408a-408n of PE₁ 412a-PEₙ 412n for weight distribution. For example, each respective MUX of the MUXs 408a-408n accepts a data byte and based on the MUX control signal, the respective MUX may route the data byte appropriately. For example, if the MUX control signal indicates that the data is part of the sparsity map, then the MUXs 408a-408n may be stored in the map storages 410a-410n. If the MUX control signal indicates that the data is part of the weight data, then the MUXs 408a-408n may be stored in the data storages 412a-412n.

In some embodiments, after the summation of the maximum values of the map register 402a and weight register 402b has been reached by a number of load cycles as computed by the comparator 404 and/or byte counter 406, all the information that is necessary to start computation (sparsity bitmap and weight data bytes) are already available within the PE₁-PE₁₅. In contrast other compression schemes may incur a total of N cycles to load the sparsity bitmap and the weight data bytes, irrespective of the amount of sparsity available in weight data, where N is the total number of dense weight data points that are required to be populated into a single PE.

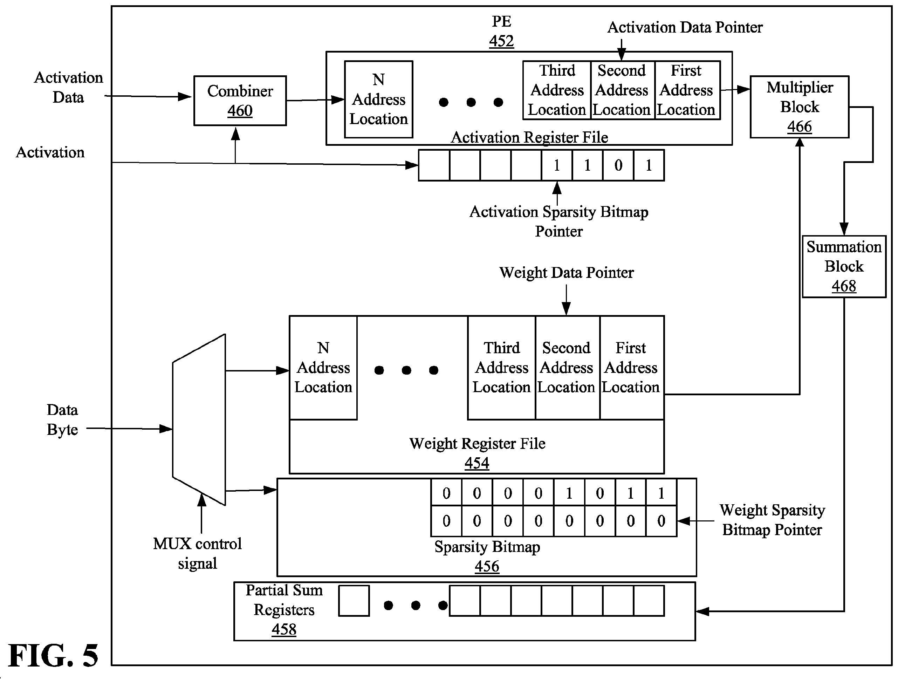

FIG. 5 illustrates a PE 452 that may execute a neural network workload. The PE 452 may be implemented in conjunction with any of the embodiments described herein, including the process 100 (FIG. 1), method 300 (FIG. 2), scheme 350 (FIG. 3) and the architecture 400 (FIG. 4). The PE 452 illustrates a layout of compressed data and the reconstruction of sparsity bitmaps within the individual PE 452. The weight data within the PE 452 may include a sparsity bitmap 456 (e.g., a register) and the weight register file 454 to hold the weight data bytes at different address locations including first address location-N address location.

Based on the MUX control signal, which is described above with respect to architecture 400 (FIG. 4), the data byte input to the PE for the weights is interpreted as a weight sparsity bitmap byte to be stored into a weight register file 454, or a weight data byte to be stored in a sparsity bitmap 456 and is routed to its appropriate location. The write data point and the weight sparsity bitmap pointer for both the weight register file 454 as well as the sparsity bitmap 456 are updated accordingly. In some embodiments, the sparsity bits may be written prior to any writing of the weight data bytes. In contrast, in some embodiments for the activation case, each byte of activation data (e.g., intermediate feature maps generated as the outputs from intermediate hidden layers in a DNN) and a corresponding bit in the sparsity bitmap may be being written to in a lock step fashion (e.g., written nearly concurrently).

In some embodiments, during processing, activation data and its corresponding write enable may be together provided to write the data in the activation register file. The combiner 460 may illustrate a combination of the data and the write enable that are used together to write the activation data within the activation register file. The activation data and the write enable may be together used to write the sparsity bitmap and the compressed data in the activation register file. The above process may further be executed for both for the activations as well as the weights within the PE 452. The activation data and weight register file 454 may provide outputs to the multiplier block 466 and the summation block 468 to be multiplied, summed and/or accumulated. In some embodiments, a multiply and accumulate or a MAC may be a computation element of the PE 452. The summed value may be stored in the partial sum registers 458 for further processing. In some embodiments, the weight Sparsity Bitmap pointer may be identical in dimensions and functionality to the activation sparsity bitmap pointer counterpart.

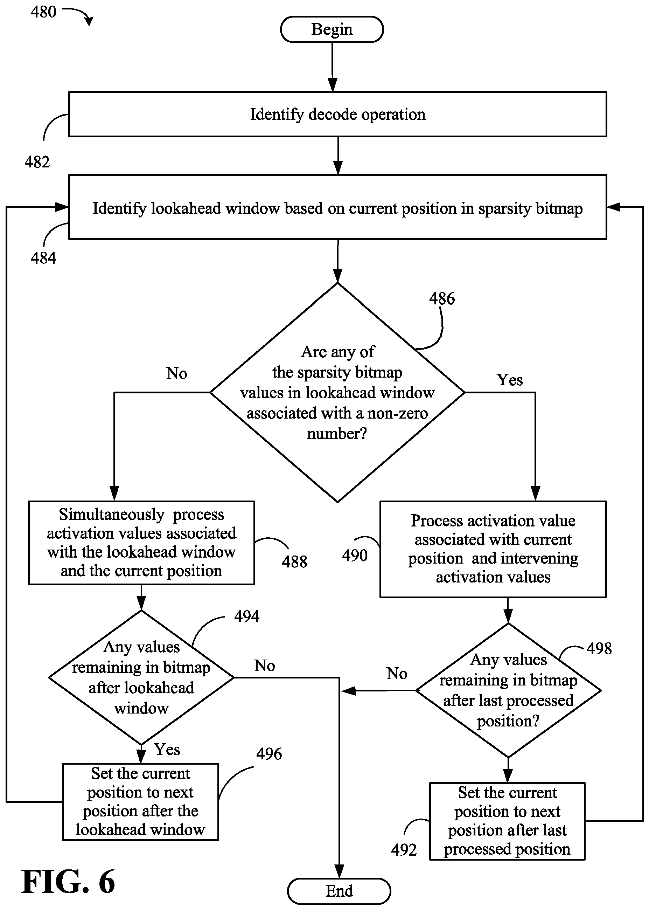

FIG. 6 shows a method 480 of implementing a lookahead activation system according to some embodiments. More particularly, the method 480 may be implemented in one or more modules as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof. The method 480 may be implemented in conjunction with the embodiments described herein.

Illustrated processing block 482 identifies a decode operation 482. Illustrated processing block 484 identifies a lookahead window for a sparsity bitmap decode operation based on a current position in the bitmap. Illustrated processing block 486 determines if any of the sparsity bitmap values from the sparsity bitmap in the lookahead window are associated with a non-zero number. If not, illustrated processing block 488 simultaneously processes and loads activation values (e.g., weights) associated with the lookahead window and the current position. Illustrated processing block 494 determines if any values remain in the bitmap after the lookahead window. If so, processing block 496 sets the current position to a next position after lookahead window.

If processing block 486 determines that one or more of the sparsity bitmap values in the lookahead window are associated with a non-zero number, then illustrated processing block 490 processes activation value associated with current position and intervening activation values associated with zero values that are prior to the first non-zero value. For example, if the lookahead window is set to two values beyond the current value, the first value corresponds to a zero value and the second value corresponds to a non-zero value, then the method 500 may simultaneously process activations associated with the current value and the first value after the current value.

Illustrated processing block 498 determines if any values remain in bitmap after last processed position. If so, illustrated processing block 492 sets the current position to next position after last processed position.

Method 480 may load activations and employ a tunable look-ahead window that skips activations that are zero within the specified window length thus reducing the load time by a factor proportional of number of consecutive zeros.

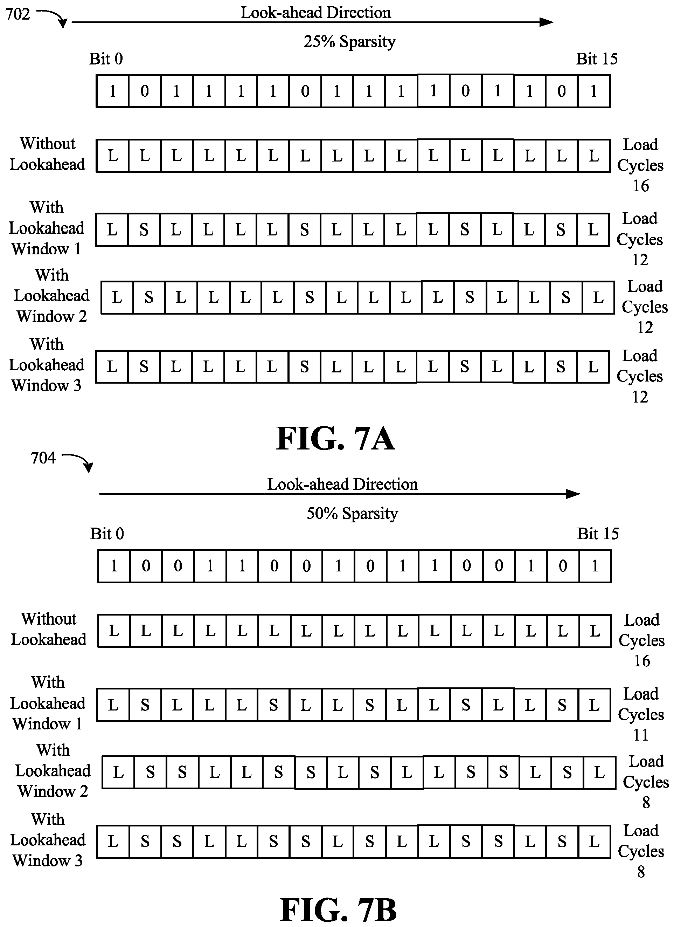

FIGS. 7A-7C illustrates an enhanced and efficient compression technique where sparse activations that have a zero value within a pre-specified tunable window length may be skipped during a load cycle for processing elements. Thus, some embodiments may skip a data value and the load cycle associated with the data value when a zero value is encountered in the lookahead. For example, data corresponding to a zero weight will be zero and non-existent, which allows skipping those loads and activation data associated with zero weight terms. It is worth noting that the sparsity bitmap may correspond to a sparsity representation, such as representation of sparsity 106 (FIG. 1) as described above.

FIGS. 7A-7C illustrate the above. For example, in FIGS. 7A-7C, 16B activations may be being broadcast into a group of PEs. In the absence of the above lookahead technique, to distribute 16B of activations with 25%-75% sparsity may take 16 load cycles regardless of the sparsity. With a lookahead window of 1-3 in a sparsity bitmap having a 25% sparsity, the number of load cycles reduces to 12 as illustrated in lookahead example 702 of FIG. 7A.

The reason for the above is that when the sparsity decoder decodes the byte stream, the sparsity decoder of a PE may first identify the sparsity bitmap (e.g., Bit 0-Bit 15) to determine which byte positions are non-zero. The bytes may be broadcast to a group of PEs, so the decoder must step through the relevant portions of sparsity bitmap that are associated with the PE, one byte at a time. Hence, even if there is significant amount of sparsity in compute, the sparsity may not be fully leveraged due to load taking 16 cycles to complete and effectively blocking compute.

In FIG. 7A, the lookahead example 702 with a look ahead window of 1 may identify the immediate byte as well as the following byte in the sparsity bitmap to check if the following byte is 0. If a 0 is detected, then a skip signal may be triggered to skip the load, which allows two activation data points to be processed simultaneously. Doing so may reduce the load cycles from 16 to 12. A skip is denoted as a "S" and a load is denoted as a "L."

FIG. 7B, sparsity example 704 may detect it at bit 0 of the sparsity bitmap, whether a "10" pattern exists. If the lookahead scheme detects such a pattern, then a skip signal will be triggered which allows 2 activation data points to be processed simultaneously. For lookahead example 704 provided in FIG. 7B, for a look-ahead window length of 1, the lookahead scheme may execute in 11 cycles to load all 16 activation points resulting in 31% load cycle savings for activations. For a look-ahead window length of 2 and 3, example 704 check for patterns of "100" and "1000" respectively, to trigger the skip signal. Example 704 requires 8 cycles in both look-ahead length =2 and look-ahead length = 3 cases to load 16 activation points, resulting in 50% load cycle savings. Depending on the nature of sparsity available in activation data, look-ahead window length may be tuned via compiler programming of configuration registers to achieve maximum load cycle savings for activations.

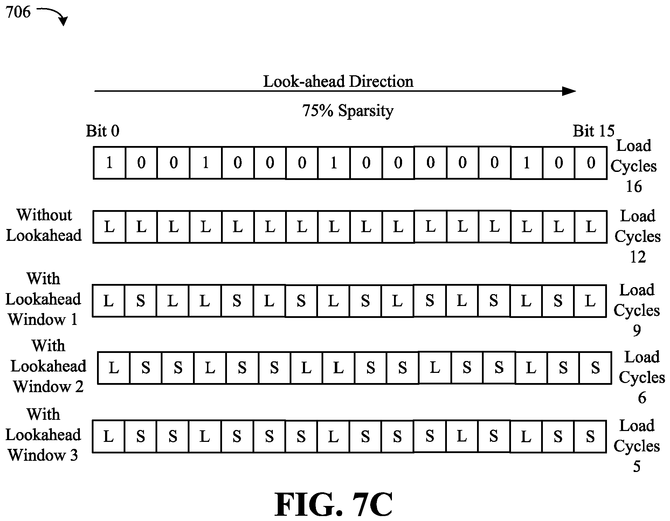

In lookahead example 706 of FIG. 7C, 75% sparsity of the sparsity bitmap is illustrated. Lookahead example 706 reduces 16 load cycles to 12 load cycles for a lookahead window of 1, 9 load cycles for a lookahead window of 2, 6 load cycles for a lookahead window of 3 and 5 load cycles for a lookahead window of 3.

Thus, the lookahead examples 702, 704, 706 employ a lookahead technique for loading activations, to employ a tunable look-ahead window that skips activations that are zero within the specified window length. Doing so may reduce the load time by a factor proportional of number of consecutive zeros within the activation sparsity map enhancing performance and reducing latency caused by load blocks.

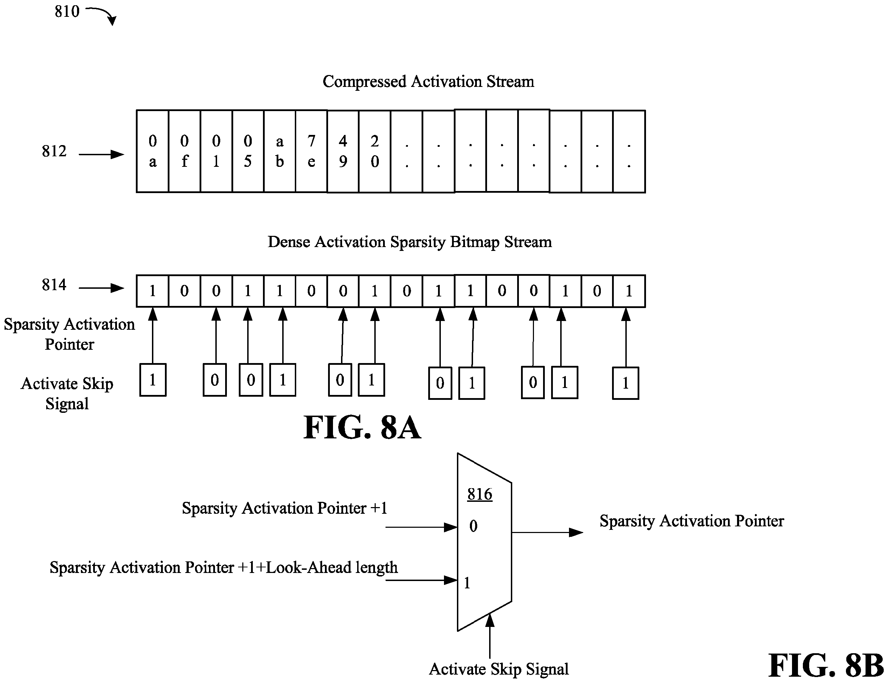

FIGS. 8A and 8B illustrate a layout of compressed data and the reconstruction of sparsity bitmaps within an individual PE. The embodiments of FIGS. 8A-8B may be implemented within the PE 452 (FIG. 5) to be part of the PE 452. The activation data within a PE may include a sparsity bitmap register 814 and activation register 812 to hold activation data bytes. Based on the activation skip signal, the sparsity activation pointer, which is the activation sparsity bitmap write pointer, may be incremented. When the activate skip signal is equal to 0 (a non-zero value detected), the MUX 816 may increment the value of the sparsity activation pointer by 1. When the activate skip signal is equal to 1 (a zero value detected), the sparsity activation pointer may be incremented by 1 + Look-ahead Length from the current value. In addition, when an activation weight identifier is "high" (illustrated in FIG. 5), activation data (illustrated in FIG. 5) may be written into an activation register file (FIG. 5) which is in a normal mode of operation. The logic for generating the skip condition is also shown in FIGS. 8A and 8B.

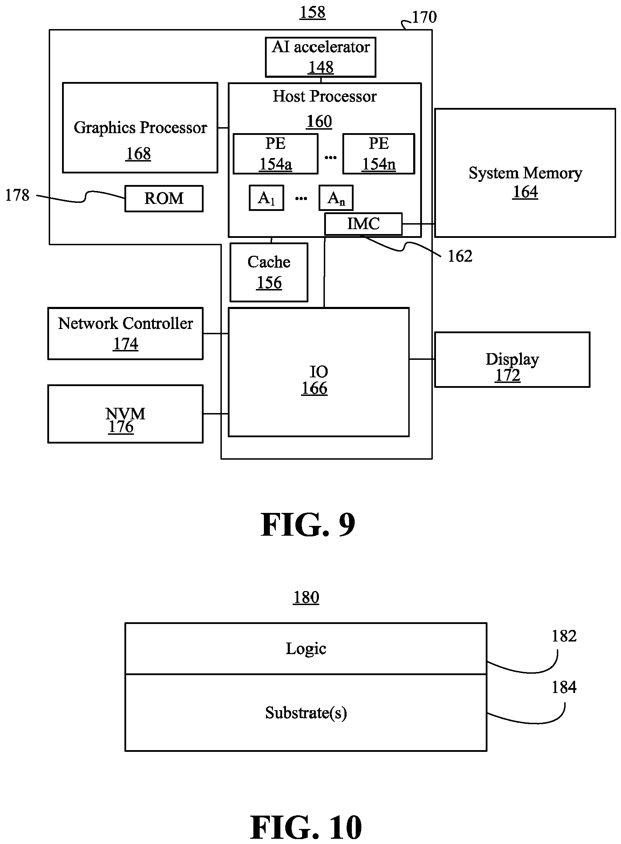

Turning now to FIG. 9, an efficient neural network processing computing system 158 is shown. The computing system 158 may generally be part of an electronic device/platform having computing functionality (e.g., personal digital assistant/PDA, notebook computer, tablet computer, convertible tablet, server), communications functionality (e.g., smart phone), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), etc., or any combination thereof. In the illustrated example, the system 158 includes a host processor 160 (e.g., CPU with one or more processor cores) having an integrated memory controller (IMC) 162 that is coupled to a system memory 164.

The illustrated system 158 also includes a graphics processor 168 (e.g., graphics processing unit/GPU) and an input output (IO) module 166 implemented together with the processor 160 (e.g., as microcontrollers) on a system on chip 170 (SOC) may be a semiconductor die , where the IO module 166 may communicate with, for example, a display 172 (e.g., touch screen, liquid crystal display/LCD, light emitting diode/LED display), a network controller 174 (e.g., wired and/or wireless), and mass storage 176 (e.g., HDD, optical disc, SSD, flash memory or other NVM). The illustrated SOC 170 includes a ROM 178 with logic instructions, which when executed by the host processor 160 and/or graphics processor 168 of the SOC 170, cause the computing system 158 to perform one or more aspects of process 100 (FIG. 1), method 300 (FIG. 2), compression scheme 350 (FIG. 3), architecture 400, PE 452 (FIG. 5), method (FIG. 6), compression techniques (FIGS. 7A-7C), and the embodiments of FIGS. 8A-8B already discussed.

In some embodiments, the system 158 may further include processors (not shown) and/or an AI accelerator 148 that is dedicated to artificial intelligence (AI) and/or neural network (NN) processing. For example, the system SoC 170 may include vision processing units (VPUs, not shown) and/or other AI/NN-specific processors such as the AI accelerator 148, etc. In some embodiments, any aspect of the embodiments described herein may be implemented in the processors and/or accelerators dedicated to AI and/ or NN processing such as AI accelerator 148, the graphics processor 168 and/or the host processor 160.

For example, the host processor 160 may include PEs 154a-154n (e.g., processor cores, execution units, etc.). The host processor 160 may store data associated with a neural network workload in the cache 156 and specifically in a compressed data format and sparsity bitmap as described herein. In doing so, execution of the workload may be enhanced with efficiency and lower latency since compute processes may not be blocked by loading. In some embodiments, the computing system 158 may include a network controller 174 that permits the system 158 to communicate with other compute nodes, devices, etc. that also execute workloads of the neural network.

FIG. 10 shows a semiconductor package apparatus 180. The illustrated apparatus 180 includes one or more substrates 184 (e.g., silicon, sapphire, gallium arsenide) and logic 182 (e.g., transistor array and other integrated circuit/IC components) coupled to the substrate(s) 184. In one example, the logic 182 is implemented at least partly in configurable logic or fixed-functionality logic hardware. The logic 182 may implement one or more aspects of process 100 (FIG. 1), method 300 (FIG. 2), compression scheme 350 (FIG. 3), architecture 400, PE 452 (FIG. 5), method (FIG. 6), compression techniques (FIGS. 7A-7C), and the embodiments of FIGS. 8A-8B already discussed. In one example, the logic 182 includes transistor channel regions that are positioned (e.g., embedded) within the substrate(s) 184. Thus, the interface between the logic 182 and the substrate(s) 184 may not be an abrupt junction. The logic 182 may also be considered to include an epitaxial layer that is grown on an initial wafer of the substrate(s) 184.

In some embodiments, the logic 182 may further include processors (not shown) and/or accelerators (not shown) dedicated to AI and/or NN processing. For example, the logic 182 may include VPUs, and/or other AI/NN-specific processors, etc. In some embodiments, any aspect of the embodiments described herein may be implemented in the processors and/or accelerators dedicated to AI and/ or NN processing.

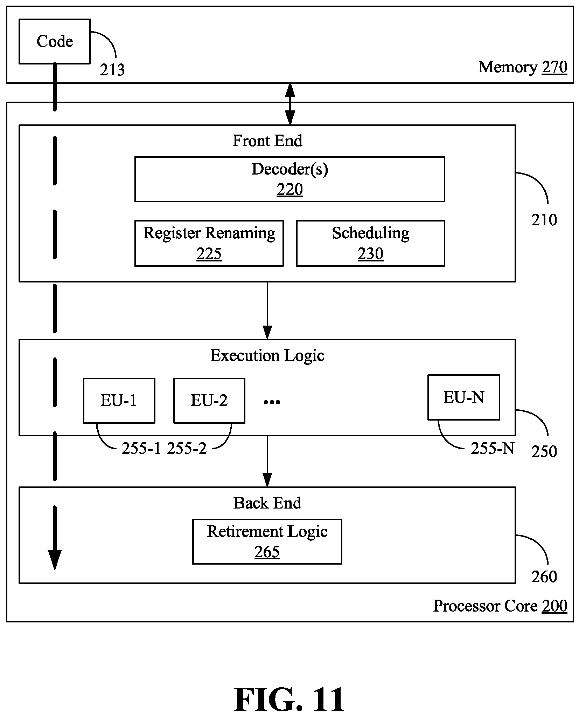

FIG. 11 illustrates a processor core 200 according to one embodiment. The processor core 200 may be the core for any type of processor, such as a micro-processor, an embedded processor, a digital signal processor (DSP), a network processor, or other device to execute code. Although only one processor core 200 is illustrated in FIG. 11, a processing element may alternatively include more than one of the processor core 200 illustrated in FIG. 11. The processor core 200 may be a single-threaded core or, for at least one embodiment, the processor core 200 may be multithreaded in that it may include more than one hardware thread context (or "logical processor") per core.

FIG. 11 also illustrates a memory 270 coupled to the processor core 200. The memory 270 may be any of a wide variety of memories (including various layers of memory hierarchy) as are known or otherwise available to those of skill in the art. The memory 270 may include one or more code 213 instruction(s) to be executed by the processor core 200, wherein the code 213 may implement one or more aspects of process 100 (FIG. 1), method 300 (FIG. 2), compression scheme 350 (FIG. 3), architecture 400, PE 452 (FIG. 5), method (FIG. 6), compression techniques (FIGS. 7A-7C), and the embodiments of FIGS. 8A-8B already discussed. The processor core 200 follows a program sequence of instructions indicated by the code 213. Each instruction may enter a front end portion 210 and be processed by one or more decoders 220. The decoder 220 may generate as its output a micro operation such as a fixed width micro operation in a predefined format, or may generate other instructions, microinstructions, or control signals which reflect the original code instruction. The illustrated front end portion 210 also includes register renaming logic 225 and scheduling logic 230, which generally allocate resources and queue the operation corresponding to the convert instruction for execution.

The processor core 200 is shown including execution logic 250 having a set of execution units 255-1 through 255-N. Some embodiments may include a number of execution units dedicated to specific functions or sets of functions. Other embodiments may include only one execution unit or one execution unit that can perform a particular function. The illustrated execution logic 250 performs the operations specified by code instructions.

After completion of execution of the operations specified by the code instructions, back end logic 260 retires the instructions of the code 213. In one embodiment, the processor core 200 allows out of order execution but requires in order retirement of instructions. Retirement logic 265 may take a variety of forms as known to those of skill in the art (e.g., re-order buffers or the like). In this manner, the processor core 200 is transformed during execution of the code 213, at least in terms of the output generated by the decoder, the hardware registers and tables utilized by the register renaming logic 225, and any registers (not shown) modified by the execution logic 250.

Although not illustrated in FIG. 11, a processing element may include other elements on chip with the processor core 200. For example, a processing element may include memory control logic along with the processor core 200. The processing element may include I/O control logic and/or may include I/O control logic integrated with memory control logic. The processing element may also include one or more caches.

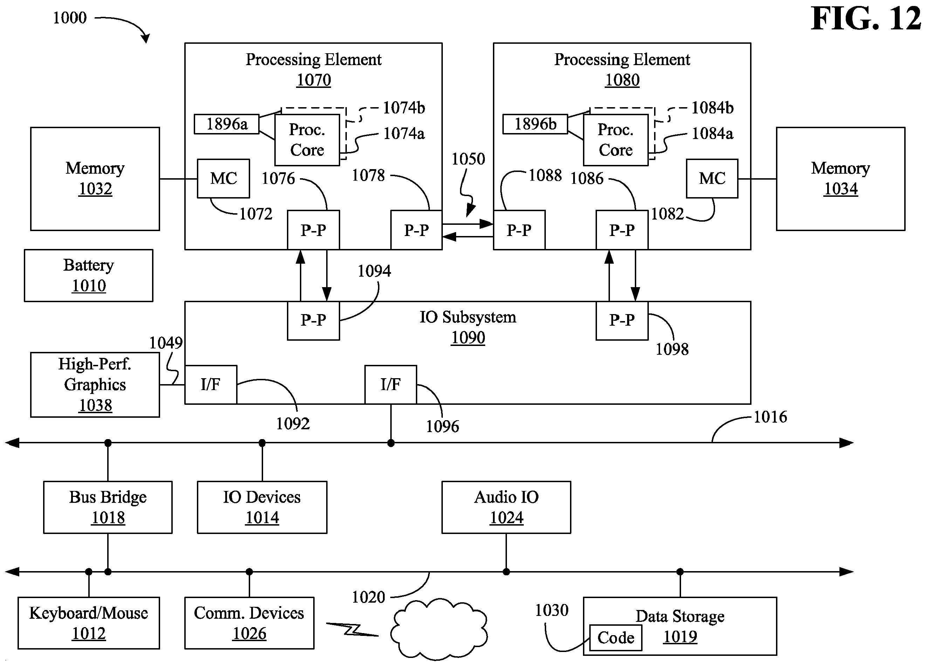

Referring now to FIG. 12, shown is a block diagram of a computing system 1000 embodiment in accordance with an embodiment. Shown in FIG. 12 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 12 may be implemented as a multi-drop bus rather than point-to-point interconnect.

As shown in FIG. 12, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 11.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments is not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 12, MC's 1072 and 1082 couple the processors to respective memories, namely a memory 1032 and a memory 1034, which may be portions of main memory locally attached to the respective processors. While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 12, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 12, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 may implement one or more aspects of process 100 (FIG. 1), method 300 (FIG. 2), compression scheme 350 (FIG. 3), architecture 400, PE 452 (FIG. 5), method (FIG. 6), compression techniques (FIGS. 7A-7C), and the embodiments of FIGS. 8A-8B already discussed. Further, an audio I/O 1024 may be coupled to second bus 1020 and a battery 1010 may supply power to the computing system 1000.

Note that other embodiments are contemplated. For example, instead of the point-to-point architecture of FIG. 12, a system may implement a multi-drop bus or another such communication topology. Also, the elements of FIG. 12 may alternatively be partitioned using more or fewer integrated chips than shown in FIG. 12.

### Additional Notes and Examples:

Example 1 comprises a computing system comprises a processor that is to include a plurality of processing elements that is to execute a workload associated with a neural network, a network controller to communicate with one or more other compute nodes associated with execution of the neural network, and a memory including a set of executable program instructions, which when executed by the processor, cause the computing system to identify an assignment of weights of the workload to the plurality of processing elements, generate a representation that is to represent whether each of the weights is a zero value or a non-zero value, and store the representation into partitions of a storage structure based on the assignment of the weights, wherein the partitions are each to be dedicated to a different one of the processing elements.
Example 2 comprises the computing system of Example 1, wherein the instructions, when executed by the processor, further cause the computing system to for each respective weight of the weights, generate a representation value that is to represent whether the respective weight is a zero value or a non-zero value, identify a respective processing element of the processing elements that is to execute an operation based on the respective weight, and store the representation value in one of the partitions dedicated to the respective processing element.
Example 3 comprises the computing system of Example 1, wherein the instructions, when executed by the processor, further cause the computing system to remove zero values from the weights to generate compressed weights, identify a maximum number of non-zero weights of the non-zero weights that are each associated with a first processing element of the processing elements, and identify that each of a group of weights of the compressed weights is associated with a second processing element of the processing elements, identify that a total number of the group of the weights is less than the maximum number, and insert a zero value into a group of weights of the compressed weights in response to the total number being less than the maximum number.
Example 4 comprises the computing system of Example 1, wherein the instructions, when executed by the processor, further cause the computing system to decode the representation into a plurality of bits, and identify a lookahead window that is to correspond to a number of bits, during a same load cycle, identify whether a current byte position corresponds to a zero value and whether a next byte position corresponds to a zero value, and bypass a load process associated with the next byte position in response to the next byte position corresponding to the zero value.
Example 5 comprises the computing system of any one of Examples 1 to 4, wherein the storage structure is to be a bitmap.
Example 6 comprises the computing system of Example 5, wherein a first partition of the partitions is to correspond to a first line of the bitmap, further wherein the first partition is to be dedicated to a first processing element of the plurality of processing elements, and a second partition of the partitions is to correspond to a second line of the bitmap, further wherein the second partition is to be dedicated to a second processing element of the plurality of processing elements.
Example 7 comprises a semiconductor apparatus comprising one or more substrates, logic coupled to the one or more substrates, wherein the logic is implemented at least partly in one or more of configurable logic or fixed-functionality logic hardware, the logic coupled to the one or more substrates to identify an assignment of weights of a workload to a plurality of processing elements, wherein the workload is to be associated with a neural network, generate a representation that is to represent whether each of the weights is a zero value or a non-zero value, and store the representation into partitions of a storage structure based on the assignment of the weights, wherein the partitions are each to be dedicated to a different one of the processing elements.
Example 8 comprises the apparatus of Example 7, wherein the logic coupled to the one or more substrates is to for each respective weight of the weights, generate a representation value that is to represent whether the respective weight is a zero value or a non-zero value, identify a respective processing element of the processing elements that is to execute an operation based on the respective weight, and store the representation value in one of the partitions dedicated to the respective processing element.
Example 9 comprises the apparatus of Example 7, wherein the logic coupled to the one or more substrates is to remove zero values from the weights to generate compressed weights, identify a maximum number of non-zero weights of the non-zero weights that are each associated with a first processing element of the processing elements, identify that each of a group of weights of the compressed weights is associated with a second processing element of the processing elements, identify that a total number of the group of the weights is less than the maximum number, and insert a zero value into a group of weights of the compressed weights in response to the total number being less than the maximum number.
Example 10 comprises the apparatus of Example 7, wherein the logic coupled to the one or more substrates is to decode the representation into a plurality of bits, and identify a lookahead window that is to correspond to a number of bits, during a same load cycle, identify whether a current byte position corresponds to a zero value and whether a next byte position corresponds to a zero value, and bypass a load process associated with the next byte position in response to the next byte position corresponding to the zero value.
Example 11 comprises the apparatus of any one of Examples 7 to 10, wherein the storage structure is to be a bitmap.
Example 12 comprises the apparatus of Example 11, wherein a first partition of the partitions is to correspond to a first line of the bitmap, further wherein the first partition is to be dedicated to a first processing element of the plurality of processing elements, and a second partition of the partitions is to correspond to a second line of the bitmap, further wherein the second partition is to be dedicated to a second processing element of the plurality of processing elements.
Example 13 comprises the apparatus of Example 7, wherein the logic coupled to the one or more substrates includes transistor channel regions that are positioned within the one or more substrates.
Example 14 comprises at least one computer readable storage medium comprising a set of instructions, which when executed by a computing device, cause the computing device to identify an assignment of weights of a workload to a plurality of processing elements, wherein the workload is to be associated with a neural network, generate a representation that is to represent whether each of the weights is a zero value or a non-zero value, and store the representation into partitions of a storage structure based on the assignment of the weights, wherein the partitions are each to be dedicated to a different one of the processing elements.
Example 15 comprises the at least one computer readable storage medium of Example 14, wherein the instructions, when executed, cause the computing device to for each respective weight of the weights, generate a representation value that is to represent whether the respective weight is a zero value or a non-zero value, identify a respective processing element of the processing elements that is to execute an operation based on the respective weight, and store the representation value in one of the partitions dedicated to the respective processing element.
Example 16 comprises the at least one computer readable storage medium of Example 14, wherein the instructions, when executed, cause the computing device to remove zero values from the weights to generate compressed weights, identify a maximum number of non-zero weights of the non-zero weights that are each associated with a first processing element of the processing elements, and identify that each of a group of weights of the compressed weights is associated with a second processing element of the processing elements, identify that a total number of the group of the weights is less than the maximum number, and insert a zero value into a group of weights of the compressed weights in response to the total number being less than the maximum number.
Example 17 comprises the at least one computer readable storage medium of Example 14, wherein the instructions, when executed, cause the computing device to decode the representation into a plurality of bits, and identify a lookahead window that is to correspond to a number of bits, during a same load cycle, identify whether a current byte position corresponds to a zero value and whether a next byte position corresponds to a zero value, and bypass a load process associated with the next byte position in response to the next byte position corresponding to the zero value.
Example 18 comprises the at least one computer readable storage medium of any one of Examples 14 to 17, wherein the storage structure is to be a bitmap.
Example 19 comprises The at least one computer readable storage medium of Example 18, wherein a first partition of the partitions is to correspond to a first line of the bitmap, further wherein the first partition is to be dedicated to a first processing element of the plurality of processing elements, and a second partition of the partitions is to correspond to a second line of the bitmap, further wherein the second partition is to be dedicated to a second processing element of the plurality of processing elements.
Example 20 comprises a method comprising identifying an assignment of weights of a workload to a plurality of processing elements, wherein the workload is to be associated with a neural network, generating a representation that is to represent whether each of the weights is a zero value or a non-zero value, and storing the representation into partitions of a storage structure based on the assignment of the weights, wherein the partitions are each to be dedicated to a different one of the processing elements.
Example 21 comprises the method of Example 20, further comprising for each respective weight of the weights, generating a representation value that is to represent whether the respective weight is a zero value or a non-zero value, identifying a respective processing element of the processing elements that is to execute an operation based on the respective weight, and storing the representation value in one of the partitions dedicated to the respective processing element.
Example 22 comprises the method of Example 20, further comprising removing zero values from the weights to generate compressed weights, identifying a maximum number of non-zero weights of the non-zero weights that are each associated with a first processing element of the processing elements, and identifying that each of a group of weights of the compressed weights is associated with a second processing element of the processing elements, identifying that a total number of the group of the weights is less than the maximum number, and inserting a zero value into a group of weights of the compressed weights in response to the total number being less than the maximum number.
Example 23 comprises the method of Example 20, further comprising decoding the representation into a plurality of bits, and identifying a lookahead window that is to correspond to a number of bits, during a same load cycle, identifying whether a current byte position corresponds to a zero value and whether a next byte position corresponds to a zero value, and bypassing a load process associated with the next byte position in response to the next byte position corresponding to the zero value.
Example 24 comprises the method of any one of Examples 20 to 23, wherein the storage structure is to be a bitmap.
Example 25 comprises the method of Example 24, wherein a first partition of the partitions is to correspond to a first line of the bitmap, further wherein the first partition is to be dedicated to a first processing element of the plurality of processing elements, and a second partition of the partitions is to correspond to a second line of the bitmap, further wherein the second partition is to be dedicated to a second processing element of the plurality of processing elements.
Example 26 comprises a semiconductor apparatus comprising means for identifying an assignment of weights of a workload to a plurality of processing elements, wherein the workload is to be associated with a neural network, means for generating a representation that is to represent whether each of the weights is a zero value or a non-zero value, and means for storing the representation into partitions of a storage structure based on the assignment of the weights, wherein the partitions are each to be dedicated to a different one of the processing elements.
Example 27 comprises the apparatus of Example 26, further comprising for each respective weight of the weights, means for generating a representation value that is to represent whether the respective weight is a zero value or a non-zero value, means for identifying a respective processing element of the processing elements that is to execute an operation based on the respective weight, and means for storing the representation value in one of the partitions dedicated to the respective processing element.
Example 28 comprises the apparatus of Example 26, further comprising means for removing zero values from the weights to generate compressed weights, means for identifying a maximum number of non-zero weights of the non-zero weights that are each associated with a first processing element of the processing elements, and means for identifying that each of a group of weights of the compressed weights is associated with a second processing element of the processing elements, means for identifying that a total number of the group of the weights is less than the maximum number, and means for inserting a zero value into a group of weights of the compressed weights in response to the total number being less than the maximum number.
Example 29 comprises the apparatus of Example 26, further comprising means for decoding the representation into a plurality of bits, and means for identifying a lookahead window that is to correspond to a number of bits, means for during a same load cycle, identifying whether a current byte position corresponds to a zero value and whether a next byte position corresponds to a zero value, and means for bypassing a load process associated with the next byte position in response to the next byte position corresponding to the zero value.
Example 30 comprises the apparatus of any one of Examples 26 to 30, wherein the storage structure is to be a bitmap.
Example 31 comprises the apparatus of Example 26, wherein a first partition of the partitions is to correspond to a first line of the bitmap, further wherein the first partition is to be dedicated to a first processing element of the plurality of processing elements, and a second partition of the partitions is to correspond to a second line of the bitmap, further wherein the second partition is to be dedicated to a second processing element of the plurality of processing elements.

Thus, technology described herein may support enhanced neural network execution efficiency. The technology may also enhance neural network processing times by avoiding high latency memory fetches, while also being scalable to operate with different neural network sizes and areas. Additionally, the technology described herein may reduce overhead associated with execution and memory transfer operations.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SOCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A; B; C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A semiconductor apparatus comprising:
one or more substrates;
logic coupled to the one or more substrates, wherein the logic is implemented at least partly in one or more of configurable logic or fixed-functionality logic hardware, the logic coupled to the one or more substrates to:
identify an assignment of weights of a workload to a plurality of processing elements, wherein the workload is to be associated with a neural network;
generate a representation that is to represent whether each of the weights is a zero value or a non-zero value; and
store the representation into partitions of a storage structure based on the assignment of the weights, wherein the partitions are each to be dedicated to a different one of the processing elements.

2. The apparatus of claim 1, wherein the logic coupled to the one or more substrates is to:
for each respective weight of the weights, generate a representation value that is to represent whether the respective weight is a zero value or a non-zero value, identify a respective processing element of the processing elements that is to execute an operation based on the respective weight, and store the representation value in one of the partitions dedicated to the respective processing element.

3. The apparatus of claim 1, wherein the logic coupled to the one or more substrates is to:
remove zero values from the weights to generate compressed weights;
identify a maximum number of non-zero weights of the non-zero weights that are each associated with a first processing element of the processing elements;
identify that each of a group of weights of the compressed weights is associated with a second processing element of the processing elements;
identify that a total number of the group of the weights is less than the maximum number; and
insert a zero value into a group of weights of the compressed weights in response to the total number being less than the maximum number.

4. The apparatus of claim 1, wherein the logic coupled to the one or more substrates is to:
decode the representation into a plurality of bits; and
identify a lookahead window that is to correspond to a number of bits;
during a same load cycle, identify whether a current byte position corresponds to a zero value and whether a next byte position corresponds to a zero value; and
bypass a load process associated with the next byte position in response to the next byte position corresponding to the zero value.

5. The apparatus of any one of claims 1 to 4, wherein the storage structure is to be a bitmap.

6. The apparatus of claim 5, wherein:
a first partition of the partitions is to correspond to a first line of the bitmap, further wherein the first partition is to be dedicated to a first processing element of the plurality of processing elements; and
a second partition of the partitions is to correspond to a second line of the bitmap, further wherein the second partition is to be dedicated to a second processing element of the plurality of processing elements.

7. The apparatus of any one of claims 1 to 4, wherein the logic coupled to the one or more substrates includes transistor channel regions that are positioned within the one or more substrates.

8. At least one computer readable storage medium comprising a set of instructions, which when executed by a computing device, cause the computing device to:
identify an assignment of weights of a workload to a plurality of processing elements, wherein the workload is to be associated with a neural network;
generate a representation that is to represent whether each of the weights is a zero value or a non-zero value; and
store the representation into partitions of a storage structure based on the assignment of the weights, wherein the partitions are each to be dedicated to a different one of the processing elements.

9. The at least one computer readable storage medium of claim 8, wherein the instructions, when executed, cause the computing device to:
for each respective weight of the weights, generate a representation value that is to represent whether the respective weight is a zero value or a non-zero value, identify a respective processing element of the processing elements that is to execute an operation based on the respective weight, and store the representation value in one of the partitions dedicated to the respective processing element.

10. The at least one computer readable storage medium of claim 8, wherein the instructions, when executed, cause the computing device to:
remove zero values from the weights to generate compressed weights;
identify a maximum number of non-zero weights of the non-zero weights that are each associated with a first processing element of the processing elements; and
identify that each of a group of weights of the compressed weights is associated with a second processing element of the processing elements;
identify that a total number of the group of the weights is less than the maximum number; and
insert a zero value into a group of weights of the compressed weights in response to the total number being less than the maximum number.

11. The at least one computer readable storage medium of claim 8, wherein the instructions, when executed, cause the computing device to:
decode the representation into a plurality of bits; and
identify a lookahead window that is to correspond to a number of bits;
during a same load cycle, identify whether a current byte position corresponds to a zero value and whether a next byte position corresponds to a zero value; and
bypass a load process associated with the next byte position in response to the next byte position corresponding to the zero value.

12. The at least one computer readable storage medium of any one of claims 8 to 11, wherein the storage structure is to be a bitmap.

13. The at least one computer readable storage medium of claim 12, wherein:
a first partition of the partitions is to correspond to a first line of the bitmap, further wherein the first partition is to be dedicated to a first processing element of the plurality of processing elements; and
a second partition of the partitions is to correspond to a second line of the bitmap, further wherein the second partition is to be dedicated to a second processing element of the plurality of processing elements.

14. A method comprising:
identifying an assignment of weights of a workload to a plurality of processing elements, wherein the workload is associated with a neural network;
generating a representation that represents whether each of the weights is a zero value or a non-zero value; and
storing the representation into partitions of a storage structure based on the assignment of the weights, wherein the partitions are each to be dedicated to a different one of the processing elements.

15. The method of claim 14, further comprising:
for each respective weight of the weights, generating a representation value that represents whether the respective weight is a zero value or a non-zero value, identifying a respective processing element of the processing elements that executes an operation based on the respective weight, and storing the representation value in one of the partitions dedicated to the respective processing element.
